# EUROPÄISCHE PATENTANMELDUNG

(11) **EP 3 514 408 A2**
(43) Veröffentlichungstag der Anmeldung: **24.07.2019**
(21) Anmeldenummer: 19401002.1
(22) Anmeldetag: 11.01.2019
(51) Int. Cl.: F16H 57/04

(54) **GETRIEBE FÜR EINE BODENBEARBEITUNGSMASCHINE**

(30) Priorität: 18.01.2018 DE 102018101067
(71) Anmelder: Amazonen-Werke H. Dreyer GmbH & Co. KG, 49205 Hasbergen (DE)
(72) Erfinder: Hüer, Berthold, 49740 Haselünne (DE)

(57) **Zusammenfassung**

Getriebe (1) für eine Bodenbearbeitungsmaschine, wobei das zumindest ein Zahnrad (6) umfassende Getriebe (1) einen mittels eines Staublechs (8) in einen ersten Ölsumpfbereich (7.1) und einen zweiten Ölsumpfbereich (7.2) geteilten Ölsumpf (7) aufweist, wobei das Zahnrad (6) in den ersten Ölsumpfbereich (7.1) eintauchend, angetrieben angeordnet ist. Um eine Getriebeanordnung zu schaffen, die einen verbesserten Wärmeabtrag aus dem Öl ermöglicht, ist vorgesehen, dass das Zahnrad (6) um eine zumindest annährend vertikale Achse angetrieben ist, dass das Staublech (8) zumindest annährend unmittelbar unter dem Zahnrad (6) und zumindest teilweise oberhalb des zweiten Ölsumpfbereiches (7.2) angeordnet ist, dass der zweite Ölsumpfbereich (7.2) beruhigt ist.

## Beschreibung

Die Erfindung betrifft ein Getriebe gemäß dem Oberbegriff des Patentanspruches 1.

Ein derartiges Getriebe ist in DE 1 801 917 A1 beschrieben. Dieses Getriebe umfasst ein über ein Kegelradpaar angetriebenes Zahnrad und arbeitet mit einer Ölsumpfschmierung. Das heißt das Gehäuse des Getriebes ist zum Teil mit Öl gefüllt, so dass ein Ölsumpf entsteht. Der Ölsumpf wird mit Hilfe eines aufrecht stehenden Staublechs in einen ersten und einen zweiten Ölsumpfbereich geteilt. Das Zahnrad ist so angeordnet, dass es bei seiner Drehung in den ersten Ölsumpfbereich eintaucht und zumindest teilweise mit Öl benetzt wird. Der zweite Ölsumpfbereich wird durch von dem Zahnrad nach etwa einer Viertel Drehung nach Eintauchen abspritzendes sogenanntes Schleuderöl gespeist. Das Schleuderöl sammelt sich zwischen dem aufrecht angeordneten Staublech und dem Gehäuse und wird durch eine Bohrung im unteren Bereich des Staublechs wieder an den ersten Ölsumpfbereich abgegeben.

Nach Abgabe des Schleuderöls tritt das Zahnrad in kämmenden Kontakt am Kegelradpaar. Hierbei erwärmt sich das Öl durch den Wälzkontakt, sofern auf den Zahnflanken noch ein ausreichender Schmierfilm vorhanden ist nachdem das Zahnrad bereits eine dreiviertel Umdrehung zurückgelegt hat seit Eintauchen in den ersten Ölsumpfbereich. Anschließend taucht das Zahnrad wieder in den ersten Ölsumpfbereich ein, wobei Planscharbeit und somit ebenfalls Wärme entsteht, wie die oben genannte Schrift richtig erkannt hat. Somit liegen die beiden über den Verlauf einer Umdrehung des Zahnrades Wärme im Öl erzeugenden Schritte unmittelbar hintereinander und in Drehrichtung des Zahnrades. Die Durchmischungswirkung tangential zur Drehrichtung bei Eintauchen des Zahnrades steht hierbei dem Strom von abgekühltem Öl aus dem zweiten Ölsumpfbereich entgegen. Das führt dazu, dass sich das im ersten Ölsumpfbereich erwärmende Öl in nicht ausreichender Weise und an ungünstiger Position mit dem erkalteten Öl vermengt.

Ein Nachteil des vorstehend beschriebenen Getriebes liegt darin, dass die Anordnung des Zahnrades bzw. der Ölsumpfbereiche in Zusammenwirken mit der Drehrichtung des Zahnrades, wie vorstehend beschrieben, bewirken, dass das Zahnrad in nicht ungenügender Weise mit abgekühltem Öl versorgt wird und somit die Öltemperatur in Teilen des ersten Ölsumpfes immer weiter steigt. Eine steigende Öltemperatur führt dazu, dass die Viskosität des Öls abnimmt und somit auch die Fähigkeit einen schützenden Schmierfilm auf den Komponenten des Getriebes zu bilden. Außerdem bewirkt die gesunkene Viskosität, dass ein größerer Teil des Öles abgeschleudert wird, wodurch es zu einer Mangelschmierung am Kegelradpaar kommen kann. Insgesamt ist in der Folge die Lebensdauer des Getriebes verringert. Außerdem baut das Getriebe durch die nebeneinanderliegenden Ölsumpfbereiche unnötig groß, was auch dadurch deutlich wird, dass der zweite Ölsumpfbereich in einem zusätzlichen Flansch angeordnet ist.

Der vorliegenden Erfindung liegt die Aufgabe zugrunde, eine Getriebeanordnung zu schaffen, die einen verbesserten Wärmeabtrag aus dem Öl ermöglicht.

Diese Aufgabe wird erfindungsgemäß durch die Merkmale des Patentanspruches 1 gelöst. Durch die Anordnung des Zahnrades in einer im Wesentlichen horizontalen Drehebene und dem darunter in liegender Ebene angeordnetem Staublech wird zumindest annährend unmittelbar unterhalb des Zahnrades der erste, erwärmte und mit Luftblasen durchsetzte Ölsumpfbereich von dem zweiten Ölsumpfbereich fluidkommunizierend geteilt. In dem zweiten, von dem zumindest einen Zahnrad getrennten Ölsumpfbereich findet keine aktive Durchmischung bspw. durch Eintauchen eines Zahnrades statt, so dass das Öl dort länger verweilen und sich beruhigen kann, das heißt die eingemischten Luftblasen treten aus. Zudem wird durch die verbesserte Anordnung des Staubleches kein zusätzlicher Bauraum für den zweiten Ölsumpfbereich benötigt. Vielmehr wird der vorhandene Ölsumpfbereich in vorteilhafter Weise geteilt.

Infolge dieser Maßnahme ist besonders der Wärmeübergang aus dem zweiten Ölsumpfbereich an das Gehäuse begünstigt. Das sich im ersten Ölsumpfbereich erwärmende Öl kann im zweiten Ölsumpfbereich abkühlen, so dass insgesamt der Wärmeabtrag aus dem Öl verbessert ist und die Schmierfähigkeit des Öls erhalten bleibt.

In einer zweckmäßigen Weiterbildung der Erfindung ist vorgesehen, dass das Staublech mit zumindest einer langlochförmigen Aussparung versehen ist, wobei das Staublech mittels der zumindest einen Aussparung dazu eingerichtet ist, einen Austausch zwischen dem ersten Ölsumpfbereich und dem zweiten Ölsumpfbereich zu begünstigen. In besonders einfacher und vorteilhafter Weise ist durch die zumindest eine Aussparung die Fluidkommunikation zwischen dem ersten Ölsumpfbereich und dem zweiten Ölsumpfbereich zielführend verbessert. Die Teilung der Ölsumpfbereiche ist durch die Aussparung nicht aufgehoben, sondern vielmehr ist die Grundlage für einen Ölkreislauf zwischen dem ersten und zweiten Ölsumpfbereich geschaffen, so dass der Wärmeabtrag aus dem Öl weiter begünstigt wird. In besonders vorteilhafter Weise weist die zumindest eine Aussparung einen langlochförmigen Querschnitt auf, da dieser gegenüber beispielsweise einer kreisrunden Bohrung einen vergrößerten Öffnungsquerschnitt aufweist und so einer verbesserten Fluidkommunikation zuträglicher ist als eine einfache Bohrung.

In einer weiteren vorteilhaften Weiterbildung der Erfindung ist das Zahnrad auf einer in einer Gehäusewandung über zumindest ein Wälzlager gelagerten Welle angeordnet, wobei die Gehäusewandung den zweiten Ölsumpfbereich zumindest teilweise umschließt und mit einer den zweiten Ölsumpfbereich mit dem ersten Ölsumpfbereich ölführend verbindenden Ausgleichsbohrung versehen ist. In besonders vorteilhafter Weise sind die Fluidverbindungen zwischen den Ölsumpfbereichen durch diese Weiterbildung derart verbessert, dass der Ölkreislauf zweckmäßig durch die Ausgleichsbohrung ergänzt und/oder unterstützt ist.

In einer weiteren besonders vorteilhaften Weiterbildung der Erfindung ist vorgesehen, dass zumindest ein Wälzlager in vertikaler Richtung zwischen der Ausgleichsbohrung und dem ersten Ölsumpfbereich auf der Welle, in der Gehäusewandung angeordnet ist, und dass das Wälzlager dazu eingerichtet ist, einen Austausch zwischen dem ersten Ölsumpfbereich und dem zweiten Ölsumpfbereich zu fördern. Infolge dieser Maßnahme stellt sich unter Ausnutzung der Förderwirkung, die sich bei Wälzlagern mit insbesondere unsymmetrischen Querschnitten vorteilhaft entfaltet, ein aktiver Ölkreislauf zwischen dem ersten und zweiten Ölsumpfabschnitt ein.

Durch die Anordnung der Aussparungen im Staublech zum Zahnrad und der Ausgleichsbohrung bzw. dem Wälzlager zum Zahnrad dient der vorstehend geschilderte Ölkreislauf nicht nur zum stetigen Austausch zwischen den Ölsumpfbereichen, sondern bewirkt auch, dass die Zahnflanken des Zahnrades bevorzugt mit "frischem", abgekühlten Öl aus dem zweiten Ölsumpfbereich versorgt werden. Dies ist besonders vorteilhaft, da beim Kämmen der Zahnflanken mit den Zähnen eines weiteren Zahnrades das Öl idealer Weise seine möglichst optimale Schmierwirkung entfalten sollte. Da die Schmierwirkung des abgekühlten Öls aus dem zweiten Ölsumpfbereich infolge der wieder gestiegenen Viskosität gegenüber dem Öl aus dem ersten Ölsumpfbereich verbessert ist, ist die Lebensdauer des Getriebes in Folge der Erfindung verlängert.

Weitere Einzelheiten der Erfindung sind der Beispielsbeschreibung und den Zeichnungen zu entnehmen. Die Zeichnungen zeigen
- Fig.1: ein gattungsgemäßes Getriebe in perspektivischer Ansicht,
- Fig.2: das Getriebe in Schnittansicht,
- Fig.3: das Getriebe gemäß Fig.2 in perspektivischer Ansicht, und
- Fig.4: das Getriebe gemäß Fig.2 in Ansicht von unten, wobei Komponenten im unteren Bereich des Getriebes demontiert sind.

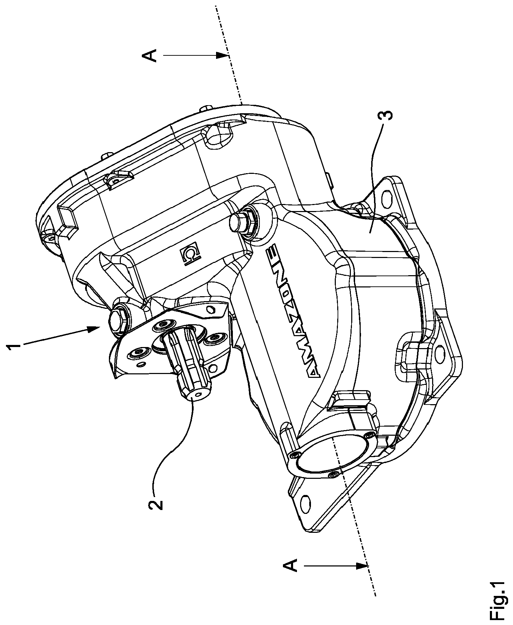

Ein gattungsgemäßes Getriebe 1 für eine nicht dargestellte Bodenbearbeitungsmaschine ist in Fig.1 gezeigt. Das Getriebe 1 wird genutzt, um Antriebsenergie von einem ebenfalls nicht dargestellten Ackerschlepper an die Bodenbearbeitungsmaschine zu übertragen. Hierzu weist das Getriebe 1 einen Zapfwellenanschluss 2 auf, welcher mit einer Zapfwelle des Ackerschleppers verbunden und so drehend angetrieben wird. Die aufgenommene Antriebsenergie wird unter Änderung der Rotationsachsen über ein im Getriebegehäuse 3 angeordnetes Kegelradpaar 4 an eine Antriebswelle 5 übertragen. Die Antriebswelle 5 gibt letztendlich die Antriebsenergie an einen Getriebekasten der Bodenbearbeitungsmaschine ab, so dass bspw. Bodenbearbeitungswerkzeuge bewegt werden können.

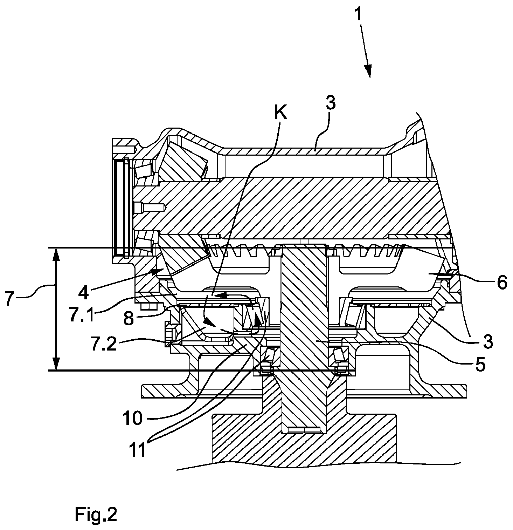

In Fig.2 ist das Getriebe 1 in Schnitt- und Teilansicht gezeigt. Das Getriebe 1 ist im Wesentlichen im Getriebegehäuse 3 angeordnet. Das Getriebegehäuse 3 ist zur Tauchschmierung im unteren Bereich bis zum Wellendichtring mit Öl gefüllt, so dass ein Ölsumpf 7 entsteht. Der Ölsumpf 7 ist durch ein sich horizontal erstreckendes Staublech 8 in einen ersten Ölsumpfbereich 7.1 und einen zweiten Ölsumpfbereich 7.2 geteilt. Das Staublech 8 ist über hier nicht näher gezeigte Befestigungsmittel mit dem Getriebegehäuse 3 ortsfest verbunden.

Die über den hier nicht zu sehenden Zapfwellenanschluss 2 aufgenommene Antriebsenergie wird über das Kegelradpaar 4 mittels eines Zahnrades 6 an die Antriebswelle 5 übertragen, so dass das Zahnrad 6 um eine vertikale Achse, die die Längsachse der Antriebswelle 5 ist, angetrieben ist. Die Antriebswelle 5 ist über zwei in einer den zweiten Ölsumpfbereich 7.2 zumindest teilweise umgebenden Gehäusewandung 10 angeordnete Wälzlager 11 gelagert. Wie Fig.2 weiter zeigt, taucht das Zahnrad 6 in den ersten Ölsumpfbereich 7.1 ein, wo es durch seine Drehbewegung und das kämmende Zusammenspiel am Kegelradpaar 4 das Öl erwärmt und durchmischt.

In vorteilhafter Weise ist das Staublech 8 zumindest annährend unmittelbar unter dem Zahnrad 6 und zumindest teilweise oberhalb des zweiten Ölsumpfbereiches 7.2 im Getriebegehäuse 3 angeordnet, so dass der sich erwärmende und durchmischte erste Ölsumpfbereich 7.1 fluidkommunizierend von dem zweiten Ölsumpfbereich 7.2 geteilt ist. Bei dieser Ausführungsform des Getriebes 1 ist im zweiten Ölsumpfbereich 7.2 keine öldurchmischende Komponente angeordnet, so dass sich das Öl im zweiten Ölsumpfbereich 7.2 beruhigt. Der zweite Ölsumpfbereich 7.2 dient dem Getriebe 1 dazu, dass das Öl dort verweilen und die aufgenommene Wärme an das Getriebegehäuse 3 abgeben kann.

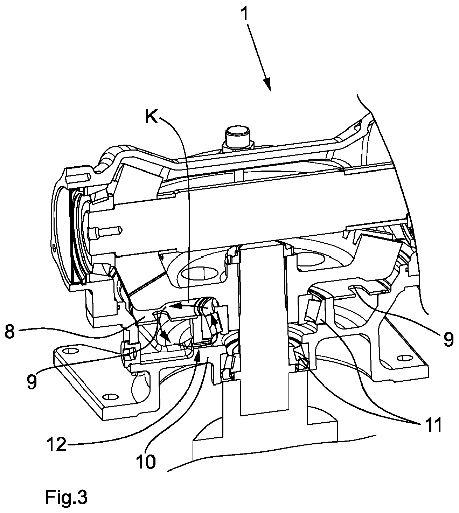

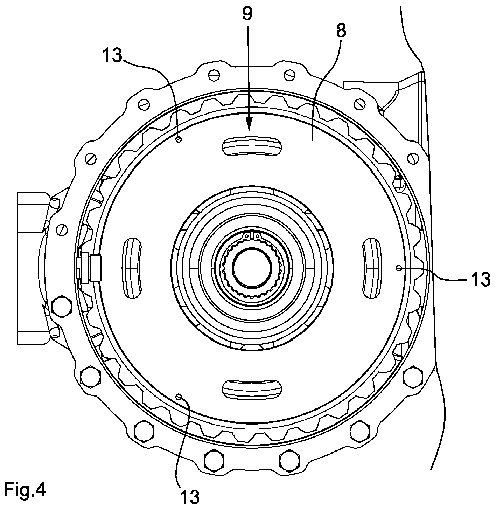

In Fig.3 ist das Getriebe 1 ebenfalls in Schnittansicht aber aus einer anderen Perspektive gezeigt. Es ist zu sehen, dass das Staublech 8 mit langlochförmigen Aussparungen 9 versehen ist, welche kreisförmig angeordnet sind, wie die Fig.4 zeigt. Diese Aussparungen 9 begünstigen die Fluidkommunikation zwischen den Ölsumpfbereichen, ohne die angestrebte Teilung mittels des Staubleches 8 aufzuheben. Außerdem ist eine Ausgleichsbohrung 12 in der Gehäusewandung 10 angeordnet. Die Ausgleichsbohrung 12 durchdringt die Gehäusewandung 10 zwischen den im Ausführungsbeispiel als Kegelrollenlager ausgebildeten Wälzlagern 11 und verbindet so den zweiten Ölsumpfbereich 7.2 mit dem ersten Ölsumpfbereich 7.1 über das obere Wälzlager 11. Somit ist das Getriebe 1 mit einem passiven Ölkreislauf geschaffen, welcher in den Zeichnungen durch die umlaufenden Pfeile K angedeutet ist.

Durch die Ausführung zumindest des oberen Wälzlagers 11, welches zwischen der Ausgleichsbohrung 12 und dem ersten Ölsumpfbereich 7.1 angeordnet ist, als Kegelrollenlager, ist der vorstehend beschriebene passive Ölkreislauf mit einer aktiven Förderwirkung versehen. Diese Förderwirkung resultiert aus den unsymmetrischen Querschnitten des hier verbauten Kegelrollenlagers und bewirkt, dass Öl aus dem zweiten Ölsumpfbereich 7.2 über die Ausgleichsbohrung 12 in den ersten Ölsumpfbereich 7.1 gedrückt wird.

In Fig.4 ist das zweite Getriebe 1 in einer Ansicht von unten gezeigt, wobei einige Komponenten im unteren Bereich des Getriebes 1 demontiert sind, so dass das Staublech 8 zu sehen ist. Die Aussparungen 9 sind, wie vorstehend beschrieben, kreisförmig angeordnet und als Langlöcher ausgebildet. Außerdem ist das Staublech 8 mit drei Befestigungsbohrungen 13 versehen. Diese Befestigungsbohrungen 13 werden genutzt, um das Staublech 8 mit dem hier demontierten unteren Teil des Getriebegehäuses 3 mittels geeigneter Befestigungsmittel zu verbinden.

### Bezugszeichenliste

- 1: Getriebe
- 2: Zapfwellenanschluss
- 3: Getriebegehäuse
- 4: Kegelradpaar
- 5: Antriebswelle
- 6: Zahnrad
- 7: Ölsumpf
- 7.1: erster Ölsumpfbereich
- 7.2: zweiter Ölsumpfbereich
- 8: Staublech
- 9: Aussparung
- 10: Gehäusewandung
- 11: Wälzlager
- 12: Ausgleichsbohrung
- 13: Befestigungsbohrung
- K: Ölkreislauf

## Patentansprüche

1. Getriebe (1), insbesondere für eine Bodenbearbeitungsmaschine, wobei das zumindest ein Zahnrad (6) umfassende Getriebe (1) einen mittels eines Staublechs (8) in einen ersten Ölsumpfbereich (7.1) und einen zweiten Ölsumpfbereich (7.2) geteilten Ölsumpf (7) aufweist, wobei das Zahnrad (6) in den ersten Ölsumpfbereich (7.1) eintauchend, angetrieben angeordnet ist, **dadurch gekennzeichnet, dass** das Zahnrad (6) um eine zumindest annährend vertikale Achse angetrieben ist, dass das Staublech (8) zumindest annährend unmittelbar unter dem Zahnrad (6) und zumindest teilweise oberhalb des zweiten Ölsumpfbereiches (7.2) angeordnet ist, dass der zweite Ölsumpfbereich (7.2) beruhigt ist.

2. Getriebe (1) nach Anspruch 1, **dadurch gekennzeichnet, dass** das Staublech (8) mit zumindest einer langlochförmigen Aussparung (9) versehen ist, dass das Staublech (8) mittels der zumindest einen Aussparung (9) dazu eingerichtet ist, einen Austausch zwischen dem ersten Ölsumpfbereich (7.1) und dem zweiten Ölsumpfbereich (7.2) zu begünstigen.

3. Getriebe (1) nach zumindest einem der vorstehenden Ansprüche, **dadurch gekennzeichnet, dass** das Zahnrad (6) auf einer in einer Gehäusewandung (10) über zumindest ein Wälzlager (11) gelagerten Welle (5) angeordnet ist, dass die Gehäusewandung (10) den zweiten Ölsumpfbereich (7.2) zumindest teilweise umschließt und mit einer Ausgleichsbohrung (12) versehen ist, dass die Ausgleichsbohrung (12) den zweiten Ölsumpfbereich (7.2) mit dem ersten Ölsumpfbereich (7.1) ölführend verbindet.

4. Getriebe (1) nach zumindest einem der vorstehenden Ansprüche, **dadurch gekennzeichnet, dass** zumindest ein Wälzlager (11) in vertikaler Richtung zwischen der Ausgleichsbohrung (12) und dem ersten Ölsumpfbereich (7.1) auf der Welle (5), in der Gehäusewandung (10) angeordnet ist, dass das Wälzlager (11) dazu eingerichtet ist, einen Austausch zwischen dem ersten Ölsumpfbereich (7.1) und dem zweiten Ölsumpfbereich (7.2) zu fördern.
